# EUROPÄISCHE PATENTANMELDUNG

(11) **EP 2 957 598 A1**
(43) Veröffentlichungstag der Anmeldung: **23.12.2015**
(21) Anmeldenummer: 15160633.2
(22) Anmeldetag: 24.03.2015
(51) Int. Cl.: C08L 77/10, C08J 5/04

(54) **KOMPOSIT ENTHALTEND EIN MATRIXMATERIAL AUS EINEM AMORPHEN POLYAMID UND DESSEN VERWENDUNG**

(30) Priorität: 20.06.2014 EP 14173332
(71) Anmelder: EMS-PATENT AG, 7013 Domat / Ems (CH)
(72) Erfinder: Hoppe, Ralf, Dr., 7000 Chur (CH); Trzaskowski, Justyna, 8887 Mels (CH)
(74) Vertreter: Pfenning, Meinig & Partner GbR

(57) **Zusammenfassung**

Die Erfindung betrifft ein Komposit, das ein Matrixmaterial aus einem amorphen Polyamid mit einer Glasübergangstemperatur von mindestens 180°C enthält. Die erfindungsgemäßen Komposite finden Verwendung für die Herstellung von verstärkten Bauteilen in den Bereichen Sport, Freizeit, Maschinenindustrie, Elektronik, Bau, Medizintechnik, Verkehrs- und Transportmittel und Luft- und Raumfahrttechnik.

## Beschreibung

Die Erfindung betrifft ein Komposit, das ein Matrixmaterial aus einem amorphen Polyamid mit einer Glasübergangstemperatur von mindestens 180°C enthält. Die erfindungsgemäßen Komposite finden Verwendung für die Herstellung von verstärkten Bauteilen in den Bereichen Sport, Freizeit, Maschinenindustrie, Elektronik, Bau, Medizintechnik, Verkehrs- und Transportmittel und Luft- und Raumfahrttechnik.

Materialien mit einem hohen Festigkeits-Masse-Verhältnis, die aus einem Faserharzverbundstoff hergestellt werden, finden in vielen Bereichen Anwendung, wo Festigkeit, Korrosionsbeständigkeit und geringes Gewicht erwünscht sind. So können derartige Faserharzverbundstoffe beispielsweise gut in Bauteilen für die Luftfahrt eingesetzt werden. Ebenso eignen sich diese Verbundstoffe hervorragend für Sportausrüstungsgegenstände, wie z.B. Tennisschläger oder Golfschläger.

In diesen Verbundstoffen liegen die Verstärkungselemente entweder in Form von unidirektionalen Filamenten, Faser-Geflechten, Faser-Geweben bzw. Faser-Gelegen vor.

Die Fasern in Form von Filamenten oder Geflechten, Geweben oder Gelegen werden in der Regel fixiert bzw. stabilisiert, was einer vereinfachten Handhabung dient sowie die Verklebung einzelner oder mehrerer dieser Flächenstrukturen durch Temperatur- oder Druckeinwirkung ermöglicht. Eine stabile Vorformung der fixierten bzw. verklebten, einlagigen oder mehrlagigen Flächenstrukturen zu Preforms ist ebenfalls durch den Einfluss von Temperatur und Druck steuerbar. Die so hergestellten und vorbehandelten Verstärkungsmaterialien werden dann in eine Polymermatrix eingebettet. Hierbei kommt der Haftung zwischen Verstärkungsmaterial und Polymermatrix eine besondere Bedeutung zu.

Weiterhin sind aus dem Stand der Technik Ansätze bekannt, bei denen auf eine zusätzliche Fixierung bzw. Stabilisierung der Fasern verzichtet wird und die Fasern unmittelbar in eine Polymermatrix eingebettet werden.

So ist aus der EP 0 229 731 B1 ein Komposit bekannt, in dem Filamente in eine Matrix aus einem amorphen Polyamid eingebettet sind. Hierbei werden teilaromatische Polyamide eingesetzt.

Aus der EP 2 479 217 A1 sind Komposite bekannt, deren Matrix aus einem amorphen Polyamid mit einem Cyclohexylmethan-Gerüst sowie einem Sulfonamid besteht, in die die Fasern eingebettet werden.

Die aus dem Stand der Technik bekannten Systeme weisen zwar gute mechanische Eigenschaften, insbesondere eine gute Festigkeit und Steifheit auf, allerdings besitzen sie häufig Nachteile hinsichtlich der Wärmeformbeständigkeit und der Wasseraufnahme. Eine hohe Wärmeformbeständigkeit und eine geringe Wasseraufnahme sind beispielsweise im Automobilbereich im KTL-Ofen (kathodische Tauchlackierung) grundlegend notwendig. Bei der kathodischen Tauchlackierung im wässrigen Phosphatbad wird die Automobilkarosserie mit einer Lackschicht beschichtet, die als Korrosionsschutz gilt. Diese Lackschicht wird anschließend an das Tauchbad im KTL-Ofen bei Temperaturen zwischen 180 - 190 °C für 20 - 30 Minuten ausgehärtet. KTL-Ofen beständige Komposit-Bauteile, wie zum Beispiel das Dach, weisen den Vorteil auf, dass sie nicht erst wie herkömmliche Bauteile nach dem KTL-Prozess modular an die Karosserie angebracht werden müssen. Der Wassergehalt des Komposit-Bauteils und damit die Wasseraufnahme spielen im KTL-Ofen eine wesentliche Rolle. Da das Wasser im KTL-Ofen aus dem Material entweicht, kann eine unregelmäßige Lackoberfläche resultieren, weshalb Materialien mit geringer Wasseraufnahme von Vorteil sind.

Es war daher Aufgabe der vorliegenden Erfindung, Komposite bereit zu stellen, die die Nachteile des Standes der Technik beseitigen und eine hohe thermische Beständigkeit, Wärmeformbeständigkeit, niedrige Wasseraufnahme und keinen Kristallistationsschwund aufweisen sowie gleichzeitig gleichbleibende oder verbesserte mechanische Eigenschaften zeigen.

Diese Aufgabe wird durch das Komposit mit den Merkmalen des Anspruchs 1 gelöst. In Anspruch 15 werden erfindungsgemäße Verwendungen angegeben. Die weiteren abhängigen Ansprüche zeigen vorteilhafte Weiterbildungen auf.

Erfindungsgemäß wird ein Komposit bereitgestellt, das ein Matrixmaterial aus einem amorphen Polyamid mit einer Glasübergangstemperatur (Tg) von mindestens 180°C enthält. Das amorphe Polyamid ist dabei aus
a) 10 bis 50 mol-% mindestens einer aromatische Dicarbonsäure ausgewählt aus der Gruppe bestehend aus Terephthalsäure, Isophthalsäure und Naphthalindicarbonsäure,
b) 0 bis 40 mol-% mindestens einer aliphatischen Dicarbonsäure,
c) 0 bis 10 mol-% mindestens einer dimeren Fettsäure,
d) 17 bis 50 mol-% mindestens eines cycloaliphatischen Diamins ausgewählt aus der Gruppe bestehend aus alkylsubsituierten Bis(4-aminocyclohexyl)methanen und alkylsubsituierten Bis(4-aminocyclohexyl)propanen,
e) 0 bis 33 mol-% mindestens eines weiteren, von Komponente (d) verschiedenen Diamins und
f) 0 bis 30 mol-% mindestens eines Lactams oder einer α,ω-Aminosäure,
gebildet, wobei sich die Summe der molaren Anteile aller Monomere auf 100 Mol-% ergänzt und das mindestens eine Lactam oder die α,ω-Aminosäure in einer Konzentration von bis zu 30 mol-%, bezogen auf die Summe der molaren Anteile aller Diamine und aller Dicarbonsäuren, enthalten ist.

Das amorphe Polyamid gemäß der vorliegenden Erfindung weist vorzugsweise eine Glasübergangstemperatur (Tg) im Bereich von 180 bis 220°C, insbesondere von 190 bis 210°C auf.

Die cycloaliphatischen Diamine der Komponente (d) werden erfindungsgemäß generell ausgewählt aus der Gruppe bestehend aus alkylsubsituierten Bis(4-aminocyclohexyl)methanen und alkylsubsituierten Bis(4-aminocyclohexyl)propanen. Alkylsubsituiert im Sinne der Erfindung bedeutet, dass Bis(4-aminocyclohexyl)methan und Bis(4-aminocyclohexyl)propan ein oder zwei Alkylgruppen mit 1 bis 4 C-Atomen pro Cyclohexylring tragen, bevorzugt in 3- und/oder -5-Stellung. Bevorzugt als Alkylgruppen sind Methyl-oder Ethylgruppen. Die cycloaliphatischen Diamine der Komponente (d) werden somit besonders bevorzugt ausgewählt aus der Gruppe bestehend aus Bis-(4-amino-3-methyl-cyclohexyl)-methan (MACM), 2,2-Bis-(4-amino-3-methyl-cyclohexyl)-propan, Bis-(4-amino-3-ethylcyclohexyl)-methan (EACM), Bis-(4-amino-3,5-dimethylcyclohexyl)-methan (TMDC). Bevorzugt werden das cycloaliphatische Diamine MACM und TMDC verwendet.

Die aromatische Dicarbonsäure der Komponente (a) kann bis zu 40 mol-% bezogen auf die Summe aller Dicarbonsäuren durch aliphatische Dicarbonsäure der Komponente (b) ersetzt werden. Bevorzugt ist die aliphatische Dicarbonsäure ausgewählt aus der Gruppe bestehend aus Adipinsäure, Azelainsäure, Sebazinsäure, 1,12-Dodecandisäure, 1,14-Tetradecandisäure, 1,18-Octadecandisäure, 1,3-Cyclohexandicarbonsäure und 1,4-Cyclohexandicarbonsäure und Kombinationen hiervon, bevorzugt mit einem Anteil von 0,1 bis 37 Mol-% und besonders bevorzugt von 5 bis 35 Mol-%, jeweils bezogen auf das amorphe Polyamid.

Weiterhin ist die aliphatische Dicarbonsäure der Komponente (c) vorzugsweise ausgewählt aus der Gruppe bestehend aus dimerer Fettsäure mit 36 C-Atomen und dimerer Fettsäure mit 44 C-Atomen, bevorzugt mit einem Anteil von 0 bis 7 Mol-% und besonders bevorzugt von 0,1 bis 5 Mol-%, jeweils bezogen auf das amorphe Polyamid.

Erfindungsgemäß ist ebenso die Anwesenheit eines Lactams oder einer α,ω-Aminosäure für die Bildung des amorphen Polyamids möglich. Dabei ist das Lactam oder die α,ω-Aminosäure vorzugsweise ausgewählt aus der Gruppe bestehend aus ε-Caprolactam, Laurinlactam, 1,6-Aminohexansäure und 1,12-Aminododecansäure, bevorzugt mit einem Anteil von 0 bis 25 Mol-% und besonders bevorzugt von 0,1 bis 20 Mol-%, jeweils bezogen bezogen auf die Summe der molaren Anteile aller Diamine und aller Dicarbonsäuren des amorphen Polyamids.

Im Falle, dass ein Teil der cycloaliphatischen Diamine der Komponente (d) durch andere Diamine der Komponente (e) ersetzt werden, wird bevorzugt, dass dieses mindestens eine Diamin ein cycloaliphatisches Diamin verschieden von Komponente (d) ist oder ein lineares oder verzweigtes aliphatischen Diamin ist, bevorzugt mit einem Anteil von 0 bis 25 Mol-% und besonders bevorzugt von 0,1 bis 15 Mol-%, jeweils bezogen auf das amorphe Polyamid.

Bevorzugte lineare oder verzweigte aliphatische Diamine (e) sind ausgewählt aus der Gruppe bestehend aus Butandiamin, Methylpentandiamin, Hexamethylendiamin, Methyloctandiamin, Nonandiamin, Decandiamin, Dodecandiamin und Trimethylhexamethylendiamin,

Bevorzugte cycloaliphatische Diamine (e) sind Isophorondiamin (5-Amino-1,3,3-trimethyl-cyclohexanmethanamin), 1,3-Diaminocyclohexan, 1,3-Diaminomethylcyclohexan, 2,5- bzw. 2,6-Bis-(aminomethyl)-norboman, 2,5-bzw. 2,6-Diaminonorboman, 2,2-Bis-(4-amino-cyclohexyl)-methan, 2,2-Bis-(4-amino-cyclohexyl)-propan.

Das amorphe Polyamid ist vorzugsweise ausgewählt aus der Gruppe bestehend aus PA MACMI/12, PA MACMT/12, PA 6I/MACMI/12, PA 6T/MACMT/12, PA MACMI/MACMT/12, PA 6I/6T/MACMI/MACMT, PA 6I/6T/MACMI/MACMT/12, PA 6I/6T/MACMI/MACMT/MACM12, PA MACMI/MACMT/MACM12, PA TMDC12/TMDCT/TMDC36, PA TMDC12/TMDCI/TMDC36, PA TMDC12/TMDCI und PA TMDC12/TMDCT und bevorzugt aus der Gruppe bestehend aus PA MACMI/12, PA 6I/6T/MACMI/MACMT, PA MACMI/MACMT/MACM12, PATMDC12/TMDCT/TMDC36 und PA TMDC12/TMDCT.

Die erfindungsgemäßen amorphen Polyamide haben eine relative Viskosität gemessen gemäß ISO 307 (0.5 g in 100 ml m-Kresol) im Bereich von vorzugsweise 1.3 bis 1.8, bevorzugt im Bereich von 1.4 bis 1.7 und besonders bevorzugt im Bereich von 1.45 bis 1.65.

Hinsichtlich der Endgruppenkonzentration weist das erfindungsgemäße amorphe Polyamid vorzugsweise eine COOH-Endgruppenkonzentration im Bereich von 10 bis 150 mmol/kg, insbesondere von 20 bis 120 mmol/kg sowie eine NH₂-Endgruppenkonzentration von 10 bis 150 mmol/kg, insbesondere von 20 bis 120 mmol/kg auf. Bevorzugt ist die Aminoendgruppenkonzentration größer als die Carboxylendgruppenkonzentration.

Das erfindungsgemäße amorphe Polyamid weist vorzugsweise eine Schmelzviskosität, bestimmt nach ISO 1133 bei 275°C und einer Auflage von 5 kg, im Bereich von 100 bis 5000 Pas, insbesondere von 500 bis 3000 Pas auf.

Eine bevorzugte Ausführungsform sieht vor, dass das Komposit mindestens ein faserhaltiges Material enthält, insbesondere ein unidirektionales Filament oder ein anderes flächiges faserhaltiges Material aus der Gruppe der Gewebe, Vliese, Gestricke, Gewirke, Gelege oder Kombinationen hiervon. Die flächigen faserhaltigen Materialien werden erfindungsgemäß aus Endlosfasern, also Filamenten, gefertigt.

Die erfindungsgemässen Komposits können eine oder mehrere Schichten der flächigen Verstärkungselemente enthalten. In den aus dem erfindungsgemässen Komposit hergestellten Bauteilen entspricht die Faserlänge nahezu der Bauteillänge.

Bei unidirektionalen Filamenten handelt es sich um Bändchen oderTapes, mit einer Breite von 0.3 cm bis 50 cm, wobei die Bändchen vorzugsweise eine

Breite von 0.3 cm bis 5.0 cm und die Tapes vorzugsweise eine Breite von 5.01 cm bis 50 cm aufweisen.

Erfindungsgemäß umfasst das faserhaltige Material keine Schnittfasern, wie sie im Stand der Technik als verstärkende Füllstoffe eingesetzt werden.

Besonders bevorzugt sind die faserhaltigen Materialien ausgewählt aus der Gruppe bestehend aus
- Glasfasern,
- Carbonfasern,
- Mineralfasern,
- synthetischen Fasern, insbesondere Polymerfasern, bevorzugt aus Polyestern und Polyamiden, insbesondere aus Polyaramiden,
- Naturfasern, insbesondere Baumwolle, Wolle, Kapok, Hanf, Leinen, Jute oder Holz sowie

Mischungen hiervon.

Es ist weiter bevorzugt, dass das Komposit weitere Zusatzstoffe enthält, insbesondere ausgewählt aus der Gruppe bestehend aus Kondensationskatalysatoren, Kettenreglern, insbesondere monofunktionelle Amine oder Carbonsäuren, Entschäumern, Stabilisatoren, anorganischen UV-Stabilisatoren, organischen UV-Stabilisatoren, anorganischen Hitzestabilisatoren, organischen Hitzestabilisatoren, Gleitmitteln und Farbstoffen.

Vorzugsweise enthält das Komposit
30 bis 90 Gew.-%, bevorzugt 35 bis 70 Gew.-%, besonders bevorzugt
40 bis 60 Gew.-% der Polyamidformmasse,
10 bis 70 Gew.-%, bevorzugt 30 bis 65 Gew.-%, besonders bevorzugt
40 bis 60 Gew.-% Fasermaterial und
0 bis 5 Gew.-%, bevorzugt 1 bis 4 Gew.-% Zusatzstoffe

Hierbei ergänzt sich die Summe der Gewichtsanteile der einzelnen Komponenten auf 100 Gew.-%.

Die erfindungsgemäßen Komposite zeichnen sich dadurch aus, dass die Komposite eine Wärmeformbeständigkeit, gemessen als HDT C von mindestens 175°C, bevorzugt von mindestens 180°C und besonders bevorzugt von mindestens 190°C aufweisen. Bevorzugt beträgt die Wärmeformbeständigkeit der Komposite, gemessen als HDT A wenigstens 185°C, besonders bevorzugt wenigstens 190°C.

Weiterhin zeichnen sich die erfindungsgemäßen Komposite durch eine hohe Zugfestigkeit von mindestens 480 MPa, bevorzugt von mindestens 500 MPa aus. Auch besitzen die Komposite eine hohe Steifigkeit. Der Zug-E-Modul ist mindestens 30000 MPa, bevorzugt von mindestens 34000 MPa und besonders bevorzugt von mindestens 40000 MPa.

Die erfindungsgemäßen Komposite finden Verwendung für die Herstellung von verstärkte Bauteilen in den Bereichen Sport, Freizeit, Maschinenindustrie, Elektronik, Bau, Medizintechnik, Verkehrs- und Transportmittel und Luft- und Raumfahrttechnik.

Im Transportmittelbereich sind dies insbesondere Strukturbauteile bevorzugt ausgewählt aus der Gruppe bestehend aus Fahrgastzelle, Chassis, selbstragende Karosserie oder Dach. Ebenso können im Transportmittelbereich Anbauteile wie Kotflügel, Türen, Heckklappen, Motorraumklappen aus dem erfindungsgemäßen Komposit bestehen. Auch Bauteile für Fahrzeuginnenraum, wie Dekorteile in Tür, Amaturenbrett oder Mittelkonsole können aus dem Komposit bestehen.

Ebenso können Schiffsbauteile, wie z.B. Kabinen, aus dem Komposit gefertigt sein.

Eine weitere Anwendung betrifft die Herstellung von Sitzschalen aus dem erfindungsmäßen Komposit.

Weitere Anwendungsfelder betreffen Sportgeräte wie Hockeyschläger, Tennisschläger, Kanupaddel, Teile von Schuhsolen, Schutzhelme.

In der Medizintechnik können Bauteile von Medizingeräten, Röntgenliegen aus dem Komposit bestehen.

Im Maschinenbau sind Roboterteile, z.B. Roboterarme, oder Bauteile von Pressen in Metallumformung vorzugsweise aus dem Komposit.

Im Elektronikbereich sind insbesondere Gerätegehäuse, Elektrowerkzeuge, Handyschalen oder Schüsseln von Satteliten-Antennen aus dem Komposit gefertigt.

Erfindungsmäß sind keine durch Spritzguss oder Extrusion hergestellten Bauteile umfasst.

Anhand der nachfolgenden Beispiele soll der erfindungsgemäße Gegenstand näher erläutert werden, ohne diesen auf die hier gezeigten spezifischen Ausführungsformen einschränken zu wollen.

### Herstellung der Matrix

### Polyamid A1

In einem 300 L Autoklaven wurden 56.38 kg TMDC, 24.13 kg Dodecandisäure, 15.35 kg Terephthalsäure, 4.69 kg Dimersäure, 0.155 kg Sandostab P-EPQ, 0.100 kg Irganox 1098 und 0.050 kg Entschäumer mit 15.0 kg Weichwasser vermischt. Das Reaktionsgemisch wurde unter Verschluss auf 210°C aufgeheizt und ein Druck von 20 bar eingestellt. Nach 4 Stunden homogenisieren mittels Rühren, wurde das Gemisch auf 300°C erhitzt und für weitere 30 Minuten gerührt. Der Druck wurde anschließend innerhalb von 2.5 Stunden auf 0 bar reduziert. Das Polymer wurde dann bis zur Einstellung des gewünschten Drehmoments weitere 30 Minuten bei 300 °C gerührt, anschließend ausgetragen und bei 60 °C Wasserbadtemperatur und kurzer Durchlaufstrecke granuliert.

### Polyamid A2

Das Polyamid A2 wurde analog zum Polyamid A1 hergestellt, wobei als Regler Benzoesäure verwendet und keine Dimersäure eingesetzt wurde. Die Einwaagen waren wie folgt:

| | |
|---|---|
| TMDC: | 60.42 kg |
| Dodecandisäure: | 36.40 kg |
| Terephthalsäure: | 11.26 kg |
| Benzoesäure: | 0.11 kg |

### Polyamid A3

Das Polyamid A3 wurde analog zum Polyamid A1 hergestellt, wobei als Diamin MACM anstatt TMDC und als Disäuren IPS anstatt Dimersäure eingesetzt wurde. Die Einwaagen waren wie folgt:

| | |
|---|---|
| MACM: | 54.90 kg |
| Dodecandisäure: | 24.37 kg |
| Terephthalsäure: | 10.10 kg |
| Isophthalsäure: | 10.30 kg |

In Tabelle 1 sind die in den Beispielen und Vergleichsbeispielen verwendeten Matrixmaterialien und deren Eigenschaften aufgeführt.

**Tabelle 1**

| **Material** | **Beschreibung** | **Hersteller** |
|---|---|---|
| Polyamid A1 | amorphes Polyamid TMDC12/TMDCT/TMDC36 im Molverhältnis 51/45/4 aus Bis(4-amino-3,5-dimethyl-cyclohexyl)methan, Dodecandisäure, Terephthalsäure und dimerer Fettsäure mit 36 C-Atomen | EMS-CHEMIE AG, Schweiz |
| | Relative Viskosität: 1,53 | |
| | Schmelzviskosität: 2900 Pas | |
| | Endgruppen COOH: 30 mmol/kg, NH2: 110 mmol/kg | |
| | Glasübergangstemperatur: 197 °C | |
| | Zug-E-Modul, : 2000 MPa | |
| | Kerbschlagzähigkeit: 5 kJ/m² | |
| | Wasseraufnahme: 2% | |
| Polyamid A2 | amorphes Polyamid TMDC12/TMDCT im Molverhältnis 70/30 aus Bis(4-amino-3,5-dimethyl-cyclohexyl)methan, Dodecandisäure und Terephthalsäure | EMS-CHEMIE AG, Schweiz |
| | Relative Viskosität: 1,53 | |
| | Schmelzviskosität: 1100 Pas | |
| | Endgruppen COOH: 100 mmol/kg, NH2: 100 mmol/kg | |
| | Glasübergangstemperatur: 193 °C | |
| | Zug-E-Modul: 1900 MPa | |
| | Kerbschlagzähigkeit: 8 kJ/m² | |
| | Wasseraufnahme: 3% | |
| Polyamid A3 | amorphes Polyamid MACMI/MACMT/MACM12 im Molverhältnis 27/27/46 aus Bis(3-methyl-4-aminocyclohexyl)methan, Isophthalsäure, Terephthalsäure und Dodecandisäure | EMS-CHEMIE AG, Schweiz |
| | Relative Viskosität: 1,54 | |
| | Schmelzviskosität: 1700 Pas | |
| | Endgruppen COOH: 40 mmol/kg, NH2: 120 mmol/kg | |
| | Glasübergangstemperatur: 200 °C | |
| | Zug-E-Modul: 2100 MPa | |
| | Kerbschlagzähigkeit: 10 kJ/m2 | |
| | Wasseraufnahme: 2% | |
| Polyamid 66 | teilkristallines Polyamid 66 aus Hexamethylendiamin und Adipinsäure (Handelsname Radipol A 45) Relative Viskosität: 1,72 | Radici Chimica, Italien |
| | Schmelzpunkt: 260 °C | |
| | Zug-E-Modul: 3700 MPa | |
| | Kerbschlagzähigkeit:C 4 kJ/m² | |
| | Wasseraufnahme: 8-9% | |
| Polyamid 12 | teilkristallines Polyamid 12 aus Laurinlactam | EMS-CHEMIE AG, Schweiz |
| | Relative Viskosität: 1,63 | |
| | Schmelzpunkt 178 °C | |
| | Zug-E-Modul: 1500 MPa | |
| | Kerbschlagzähigkeit: 6 kJ/m² | |
| | Wasseraufnahme: 1.5% | |
| Polyamid 6I/6T | amorphes Polyamid 6I/6T (Molverhältnis: 66:34) aus Hexamethylendiamin, Isopthalsäure und Terephthalsäure Relative Viskosität: 1,56 Glasübergangstemperatur: 125 °C Zug-E-Modul: 3000 MPa Kerbschlagzähigkeit: 8 kJ/m² Wasseraufnahme: 7.5% | EMS-CHEMIE AG, Schweiz |
| | | |
| | | |
| | | |
| | | |
| | | |
| Hitzestabilisator | N,N'-Hexan-1,6-diylbis[3-(3,5-di-tert-butyl-4-hydroxyphenyl-propionamid, CAS-Nr. 23128-74-7 Handelsname Irganox 1098 | BASF, Deutschland |
| Hitzestabilisator | Tetrakis(2,4-di-*tert*-butylphenyl)-4,4'-biphenyl-diphosphonit, CAS-Nr. 119345-01-6 Handelsname Sandostab P-EPQ | Clariant, Schweiz |

Die in Tabelle 1 aufgeführten Polyamide wurden durch kryogene Mahlung und anschließende Siebung in Pulver mit einer Partikelgröße im Bereich von 0 bis 500 µm (d50 im Bereich von 150 - 350 µm) überführt. Diese Polyamidpulver wurden zur Kompositherstellung verwendet.

### Lagenaufbau

Die Laminate wurden mittels Handlaminierung bereitgestellt. Dabei bestanden die Laminate aus 12 (für Zugstäbe) bzw. 14 (für Schlagstäbe) Lagen Carbonfaser-Gewebe (Toho Tenax, 245 g/m² mit Epoxy Schlichte, Köpergewebe) und einer Matrix aus amorphem Polyamid A1, A2 oder A3 (140 g/m² Pulverauflage).

Die Gewebelagen waren symmetrisch und orthotrop zueinander aufgebaut, so dass sich folgender Lagenaufbau ergab: 0°, +45°, 90°, -45° (diese Anordnung wiederholt sich in den nachfolgenden Gewebelagen).

Die Laminate wurden folgendermaßen geschichtet:
1. Teflonfolie als unterste Lage bereitstellen
2. Pulver (Matrixmaterial) auf die Teflonfolie aufstreuen
3. Gewebelage auflegen
4. Pulver auf die Gewebelage aufstreuen
5. Gewebelage auflegen
6. Pulver auf die Gewebelage aufstreuen usw.
7. auf die oberste Gewebelage Pulver aufstreuen und mit Teflonfolie abdecken

Als Pulvermenge zwischen den einzelnen Lagen wurden 140 g/m² verwendet. Dieser Aufbau wird in einer Taktpresse (von der Firma Collin) unter Hitze und Druck konsolidiert; der Pressvorgang wird zur vollständigen Konsolidierung zweimal durchgeführt.

In Tabelle 2 sind die Verfahrensbedingungen für den 1. Und 2. Heiz-Kühl-Presszyklus aufgeführt.

**Tabelle 2**

| | **Beispiele** | | | **Vergleichsbeispiele** | | |
|---|---|---|---|---|---|---|
| | **1** | **2** | **3** | **4** | **5** | **6** |
| **Verfahrensbedingung 1.Heiz-Kühl-Presszyklus** | | | | | | |
| Presstemperatur [°C] | 280 | 250 | 320 | 250 | 330 | 330 |
| Presszeit [s] | 120 | 120 | 120 | 120 | 150 | 120 |
| Druck beim Heizvorgang [bar] | 25 | 25 | 25 | 25 | 25 | 25 |
| Druck beim Kühlvorgang [bar] | 50 | 50 | 50 | 50 | 50 | 50 |
| Kühlzeit [s] | 600 | 600 | 600 | 600 | 600 | 600 |

| **Verfahrensbedingung 2**.**Heiz**-**Kühl**-**Presszyklus** | | | | | | |
|---|---|---|---|---|---|---|
| Presstemperatur [°C] | 280 | 270 | 310 | 330 | 330 | 330 |
| Presszeit [s] | 300 | 300 | 300 | 300 | 300 | 300 |
| Druck beim Heizvorgang [bar] | 25 | 25 | 25 | 25 | 25 | 25 |
| Druck beim Kühlvorgang [bar] | 50 | 50 | 50 | 50 | 50 | 50 |
| Kühlzeit [s] | 600 | 600 | 600 | 600 | 600 | 600 |

Die hergestellten Organobleche hatten folgende Abmessungen: 30 x 30 cm; 3 mm Dicke (für Zugversuch) bzw. 4 mm Dicke (für HDT Messungen).

### Herstellung der Zugstäbe

Die Zugstäbe der Dimension 250x25x3 mm und die Schlagstäbe der Dimension 80x10x4 mm wurden mittels Wasserstrahlen aus den jeweiligen Organoblechen ausgeschnitten.

Im Rahmen der vorliegenden Erfindung wurden folgende Messmethoden eingesetzt; falls nicht anders vermerkt wurden die Probenkörper in trocknem Zustand geprüft:
Schmelzpunkt und Glasübergangstemperatur (Tg):
   ISO 11357
   Granulat

Die Differential Scanning Calorimetry (DSC) wurde mit einer Aufheizrate von 20 K/min durchgeführt. Beim Schmelzpunkt wird die Temperatur am Peakmaximum angegeben. Der Mittelpunkt des Glasübergangsbereichs, welcher als Glasübergangstemperatur (Tg) angegeben wird, wurde nach der Methode "Half-step-height" ermittelt.

Zug-E-Modul:
ISO 527-4 mit einer Zuggeschwindigkeit von 1 mm/min
ISO-Zugstab Typ 3, 250x25x3 mm, Temperatur 23 °C

Zugfestigkeit:
ISO 527-4 mit einer Zuggeschwindigkeit von 5 mm/min
ISO-Zugstab Typ 3, 250x25x3 mm, Temperatur 23 °C

Schlagzähigkeit nach Charpy:
ISO 179/*eU
ISO-Prüfstab, Norm: ISO/CD 3167, Typ B1, 80 x 10 x 4 mm, Temperatur 23 °C
* 1 = nicht instrumentiert, 2 = instrumentiert

Kerbschlagzähigkeit nach Charpy:
ISO 179/*eA
ISO-Prüfstab, Norm: ISO/CD 3167, Typ B1, 80 x 10 x 4 mm, Temperatur 23 °C
* 1 = nicht instrumentiert, 2 = instrumentiert

Relative Viskosität
ISO 307
Granulat
0,5 g in 100 ml m-Kresol
Temperatur 20 °C
Berechnung der relativen Viskosität (RV) nach RV = t/t₀ in Anlehnung an Abschnitt 11 der Norm.

Wasseraufnahme
ISO 62
Platten 100x100x1 mm
Lagerung in Wasser bei 23°C

Endgruppen (Amino- und Carboxylendgruppen)

Die Amino- (NH₂) und Carboxyl (COOH)-Endgruppenkonzentrationen werden mittels einer potentiometrischen Titration bestimmt. Für die Amino-Endgruppen werden hierzu 0,2 bis 1,0 g Polyamid bzw. Polyamid-Oligomer in einem Gemisch aus 50 ml m-Kresol und 25 ml Isopropanol bei 50 bis 90 °C gelöst und nach Zusatz von Aminocapronsäure mit einer 0,05-molaren Perchlorsäurelösung titriert. Zur Bestimmung der COOH-Endgruppen werden 0,2 bis 1,0 g der zu bestimmenden Probe je nach Löslichkeit in Benzylalkohol oder einem Gemisch aus o-Kresol und Benzylalkohol bei 100 °C gelöst und nach Zugabe von Benzoesäure mit einer 0,1 M Tetra-n-butylammoniumhydroxidlösung titriert.

Schmelzviskosität
ISO 1133
Granulat
275°C, Auflagegewicht 5 kg

In Tabelle 3 sind thermische und mechanische Eigenschaften der Composites mit einem Fasergehalt von 50 Vol.-% und diversen Matrices dargestellt.

**Tabelle 3**

| | | **Beispiele** | | | **Vergleichsbeispiele** | | |
|---|---|---|---|---|---|---|---|
| **Eigenschaft** | **Einheit** | **1** | **2** | **3** | **4** | **5** | **6** |
| **Matrix** | | A1 | A2 | A3 | PA 66 | PA 12 | PA 6I/6T |
| **Tg** | **°C** | 197 | 200 | 193 | - | - | 125 |
| **Tm** | **°C** | - | - | - | 260 | 178 | - |
| **HDT C** | **°C** | 192 | 193 | 180 | 213 | 168 | 108 |
| **HDTA** | **°C** | 204 | 200 | 190 | 255 | 177 | 120 |
| **Zugfestigkeit** | **MPa** | 560 | 490 | 550 | 410 | 460 | 470 |
| **Zug-E-Modul** | **MPa** | 45000 | 35000 | 37000 | 34000 | 37000 | 42000 |
| **Wasseraufnahme** | **%** | 0,8 | 1,2 | 1,0 | 3,2 | 0,6 | 2,8 |

| | | | | | | | |
|---|---|---|---|---|---|---|---|
| * die Matrices enthalten jeweils 0,3 % Hitzestabilisatoren Tm=Schmelztemperatur, Tg=Glasübergangstemperatur | | | | | | | |

Die Kompositmaterialien aus den Beispielen 1, 2 und 3 weisen hohe Wärmeformbeständigkeiten im Bereich von 180 bis 193 °C (HDT C) auf. Im Vergleich dazu besitzen die Komposite der Vergleichsbeispiele 5 und 6 10 bis 70°C tiefere HDT C Werte. Das Komposit von Vergleichsbeispiel 4 weist gegenüber den Materialien der Beispiele 1, 2 und 3 eine höhere Wärmeformbeständigkeit auf, allerdings besitzt dieses Material mit 3.2% im Vergleich eine ca. 30% erhöhte Wasseraufnahme und zeigt deutlichen Kristallisationsschwund. Die Komposite der Beispiele 1, 2 und 3 besitzen mit Werten im Bereich von 490 - 560 MPa zudem höhere Zugfestigkeiten verglichen mit den Vergleichsbeispielen 4 bis 5.

## Patentansprüche

1. Komposit enthaltend ein Matrixmaterial aus einem amorphen Polyamid mit einer Glasübergangstemperatur (Tg) von mindestens 180°C gebildet aus
a) 10 bis 50 mol-% mindestens einer aromatische Dicarbonsäure ausgewählt aus der Gruppe bestehend aus Terephthalsäure, Isophthalsäure und Naphthalindicarbonsäure,
b) 0 bis 40 mol-% mindestens einer aliphatischen Dicarbonsäure,
c) 0 bis 10 mol-% mindestens einer dimeren Fettsäure,
d) 17 bis 50 mol-% mindestens eines cycloaliphatischen Diamins ausgewählt aus der Gruppe bestehend aus alkylsubsituierten Bis(4-aminocyclohexyl)methanen und alkylsubsituierten Bis(4-aminocyclohexyl)propanen und
e) 0 bis 33 mol-% mindestens eines weiteren, von Komponente (d) verschiedenen Diamins und
f) 0 bis 30 mol-% mindestens eines Lactams oder einer α,ω-Aminosäure,
wobei sich die Summe der molaren Anteile aller Monomere auf 100 Mol-% ergänzt und das mindestens eine Lactam oder die α,ω-Aminosäure in einer Konzentration von bis zu 30 mol-%, bezogen auf die Summe der molaren Anteile aller Diamine und aller Dicarbonsäuren, enthalten ist.

2. Komposit nach Anspruch 1,
**dadurch gekennzeichnet, dass** das amorphe Polyamid eine Glasübergangstemperatur (Tg) im Bereich von 180°C bis 220 °C, insbesondere von 190 bis 210 °C aufweist.

3. Komposit nach einem der vorhergehenden Ansprüche,
**dadurch gekennzeichnet, dass** die aliphatischen Dicarbonsäure ausgewählt ist aus der Gruppe bestehend aus Adipinsäure, Azelainsäure, Sebazinsäure, 1,12-Dodecandisäure, 1,14-Tetradecandisäure, 1,18-Octadecandisäure, 1,3-Cyclohexandicarbonsäure und 1,4-Cyclohexandicarbonsäure und Kombinationen hiervon, bevorzugt mit einem Anteil von 0,1 bis 37 Mol-% und besonders bevorzugt von 5 bis 35 Mol-%, jeweils bezogen auf das amorphe Polyamid.

4. Komposit nach einem der vorhergehenden Ansprüche,
**dadurch gekennzeichnet, dass** die dimere Fettsäure ausgewählt aus der Gruppe bestehend aus dimerer Fettsäure mit 36 C-Atomen und dimerer Fettsäure mit 44 C-Atomen, bevorzugt mit einem Anteil von 0 bis 7 Mol-% und besonders bevorzugt von 0,1 bis 5 Mol-%, jeweils bezogen auf das amorphe Polyamid.

5. Komposit nach einem der vorhergehenden Ansprüche,
**dadurch gekennzeichnet, dass** das cycloaliphatische Diamin der Komponente ausgewählt ist aus der Gruppe bestehend aus Bis-(4-amino-3-methyl-cyclohexyl)-methan (MACM), 2,2-Bis-(4-amino-3-methylcyclohexyl)-propan, Bis-(4-amino-3-ethylcyclohexyl)-methan (EACM), Bis-(4-amino-3,5-dimethylcyclohexyl)-methan (TMDC), insbesondere MACM und TMDC.

6. Komposit nach einem der vorhergehenden Ansprüche,
**dadurch gekennzeichnet, dass** das mindestens eine Lactam oder die mindestens eine α,ω-Aminosäure ausgewählt ist aus der Gruppe bestehend aus ε-Caprolactam, Laurinlactam, 1,6-Aminohexansäure und 1,12-Aminododecansäure, bevorzugt mit einem Anteil von 0 bis 25 Mol-% und besonders bevorzugt von 0,1 bis 20 Mol-%, jeweils bezogen auf das amorphe Polyamid.

7. Komposit nach einem der vorhergehenden Ansprüche,
**dadurch gekennzeichnet, dass** das mindestens eine weitere, von Komponente (d) verschiedene Diamin ausgewählt ist aus der Gruppe bestehend aus Butandiamin, Methylpentandiamin, Hexamethylendiamin, Methyloctandiamin, Nonandiamin, Decandiamin, Dodecandiamin und Trimethylhexamethylendiamin, Isophorondiamin (5-Amino-1,3,3-trimethyl-cyclohexanmethanamin), 1,3-Diaminocyclohexan, 1,3-Diaminomethylcyclohexan, 2,5- bzw. 2,6-Bis-(aminomethyl)-norboman, 2,5- bzw. 2,6-Diaminonorboman, 2,2-Bis-(4-amino-cyclohexyl)-methan, 2,2-Bis-(4-amino-cyclohexyl)-propan, bevorzugt mit einem Anteil von 0 bis 25 Mol-% und besonders bevorzugt von 0,1 bis 15 Mol-%, jeweils bezogen auf das amorphe Polyamid.

8. Komposit nach einem der vorhergehenden Ansprüche,
**dadurch gekennzeichnet, dass** das amorphe Polyamid ausgewählt ist aus der Gruppe bestehend aus PA MACMI/12, PA MACMT/12, PA 6I/MACMI/12, PA 6T/MACMT/12, PA MACMI/MACMT/12, PA 6I/6T/MACMI/MACMT, PA 6I/6T/MACMI/MACMT/12, PA 6I/6T/MACMI/MACMT/MACM12, PA MACMI/MACMT/MACM12, PA TM DC12/TM DCT/TM DC36, PATMDC12/TMDCI/TMDC36, PATMDC12/TMDCI und PA TMDC12/TMDCT und bevorzugt aus der Gruppe bestehend aus PA MACMI/12, PA 6I/6T/MACMI/MACMT, PA MACMI/MACMT/MACM12, PA TMDC12/TMDCT/TMDC36 und PA TMDC12/TMDCT.

9. Komposit nach einem der vorhergehenden Ansprüche,
**dadurch gekennzeichnet, dass** das Komposit mindestens ein faserhaltiges Material enthält, insbesondere ein unidirektionales Filament oder ein anderes flächiges faserhaltiges Material aus der Gruppe der Gewebe, Vliese, Gestricke, Gewirke, Gelege oder Kombinationen hiervon.

10. Komposit nach einem der vorhergehenden Ansprüche,
**dadurch gekennzeichnet, dass** die faserhaltigen Materialien ausgewählt sind aus der Gruppe bestehend aus
• Glasfasern,
• Carbonfasern,
• Mineralfasern,
• synthetischen Fasern, insbesondere Polymerfasern, bevorzugt aus Polyestern und Polyamiden, insbesondere aus Polyaramiden,
• Naturfasern, insbesondere Baumwolle, Wolle, Kapok, Hanf, Leinen, Jute oder Holz sowie
• Mischungen hiervon.

11. Komposit nach einem der vorhergehenden Ansprüche,
**dadurch gekennzeichnet, dass** das Komposit weitere Zusatzstoffe enthält, insbesondere ausgewählt aus der Gruppe bestehend aus Kondensationskatalysatoren, Kettenreglern, Entschäumern, Stabilisatoren, anorganischen UV-Stabilisatoren, organischen UV-Stabilisatoren, anorganischen Hitzestabilisatoren, organischen Hitzestabilisatoren, Gleitmitteln und Farbstoffen.

12. Komposit nach einem der vorhergehenden Ansprüche,
**dadurch gekennzeichnet, dass** das Komposit
30 bis 90 Gew.-%, bevorzugt 35 bis 70 Gew.-%, besonders bevorzugt
40 bis 60 Gew.-% der Polyamidformmasse,
10 bis 70 Gew.-%, bevorzugt 30 bis 65 Gew.-%, besonders bevorzugt
40 bis 60 Gew.-% Fasermaterial und
0 bis 5 Gew.-%, bevorzugt 1 bis 4 Gew.-% Zusatzstoffe
enthält, wobei sich die Summe der Gewichtsanteile der einzelnen Komponenten auf 100 Gew.-% ergänzt.

13. Komposit nach einem der vorhergehenden Ansprüche,
**dadurch gekennzeichnet, dass** das Komposit eine Wärmeformbeständigkeit, gemessen als HDT C von mindestens 175°C, bevorzugt von mindestens 180°C und besonders bevorzugt von mindestens 190°C aufweist.

14. Komposit nach einem der vorhergehenden Ansprüche,
**dadurch gekennzeichnet, dass** das Komposit eine Zugfestigkeit von mindestens 480 MPa, bevorzugt von mindestens 510 MPa und besonders bevorzugt von mindestens 530 MPa und/oder ein Zug-E-Modul von mindestens 30000 MPa, bevorzugt von mindestens 34000 MPa und besonders bevorzugt von mindestens 40000 MPa aufweist.

15. Verwendung des Komposits nach einem der vorhergehenden Ansprüche für die Herstellung von verstärkten Bauteilen in den Bereichen Sport, Freizeit, Maschinenindustrie, Elektronik, Bau, Medizintechnik, Verkehrs- und Transportmittel und Luft- und Raumfahrttechnik.
